# EUROPEAN PATENT APPLICATION

(11) **EP 4 776 026 A1**
(43) Date of publication of application: **15.07.2026**
(21) Application number: 25305023.1
(22) Date of filing: 09.01.2025
(51) Int. Cl.: G01S 13/60, G01S 13/931, G01S 7/00, G01S 13/02

(54) **A CONTROLLER, A VEHICLE AND A METHOD**

(71) Applicant: NXP B.V., 5656 AG Eindhoven (NL)
(72) Inventor: RIDOLFI, Matteo, 5656 AG Eindhoven (NL); MARTINEZ, Vincent Pierre, 31023 Toulouse (FR); TERECHKO, Andrei Sergeevich, 5656 AG Eindhoven (NL)
(74) Representative: Colaiuda, Antonella

(57) **Abstract**

The present disclosure relates to a controller configured to: receive a channel impulse response from a UWB node operating in a radar mode, wherein the UWB node is mounted in a vehicle and directed towards a traversal surface of the vehicle such that the channel impulse response is indicative of reflections of a radar signal from the traversal surface; characterise an irregularity in the traversal surface based on the received channel impulse response and one or more signature channel impulse responses, CIRs, wherein each of the signature CIRs are indicative of an irregularity which may be identified in the CIR of the UWB node.

## Description

### Field

The present disclosure relates to a controller configured to characterise an irregularity in a traversal surface. The present disclosure further relates to a vehicle comprising the controller and a method of characterising an irregularity in a traversal surface.

### Summary

According to a first aspect of the present disclosure, there is provided a controller configured to: receive a channel impulse response from a UWB node operating in a radar mode, wherein the UWB node is mounted in a vehicle and directed towards a traversal surface of the vehicle such that the channel impulse response is indicative of reflections of a radar signal from the traversal surface; characterise an irregularity in the traversal surface based on the received channel impulse response and one or more signature channel impulse responses, CIRs, wherein each of the signature CIPs are indicative of an irregularity which may be identified in the CIR of the UWB node.

In one or more embodiments, prior to characterising an irregularity, the controller may be configured to identify a change in the received CIR indicative that an irregularity has occurred and wherein the controller is configured to characterise an irregularity in the traversal surface if a change in the received CIR indicative that an irregularity has occurred is identified.

In one or more embodiments, the identified change in the CIR indicative that an irregularity has occurred may be one or more of: a change in an amplitude of the CIR greater than a predetermined threshold amplitude change; and a change in a phase of the CIR greater than a predetermined threshold phase change.

In one or more embodiments, characterising the irregularity in the CIR received from the UWB node may be further based on one or more historic channel impulse responses indicative of a channel impulse response previously received from the UWB node of the vehicle.

In one or more embodiments, the controller may be further configured to provide signalling to the UWB node configured to cause the UWB node to enter the radar mode.

In one or more embodiments, the signalling that is configured to cause the UWB node to enter the radar mode may be further configured to cause the UWB node to adjust its direction towards the traversal surface.

In one or more embodiments, the controller may be configured to provide control signalling to the UWB node to control a frequency of the radar signal based on a speed of the vehicle.

In one or more embodiments, characterising the irregularity in the received CIR from the UWB node may comprise making a comparison of one or more features of the received CIR to features of the one or more signature channel impulse responses.

In one or more embodiments, characterising the irregularity in the received CIR from the UWB node may comprise using a machine learning algorithm which is trained using the one or more signature channel impulse responses.

In one or more embodiments, the machine learning algorithm may be a classification algorithm.

In one or more embodiments, the controller may be further configured to: receive a second CIR from a second UWB node operating in a radar mode, wherein the second UWB node is mounted in the vehicle and directed towards the traversal surface of the vehicle such that the second channel impulse response is indicative of reflections of a second radar signal from the traversal surface; and characterise the irregularity further based on the received second CIR.

In one or more embodiments, based on the characterised irregularity, the controller may be further configured to one or more of: provide control signalling to a suspension system configured to change the suspension of the vehicle; provide warning signalling to a user interface system configured to cause a warning to be presented to a driver of the vehicle; provide radar control signalling to a UWB node mounted to a rear of the vehicle and configured to operate in a radar mode, wherein the radar control signalling is configured to cause an adjustment in one or more radar parameters of the UWB node.

In one or more embodiments, based on the characterised irregularity, the controller may be further configured to one or more of provide signalling indicative of the characterised irregularity and its location to one or more of: a fleet-analysis server configured to aggregate fleet data related to traversal surface irregularities; a map update server configured to integrate the information about the irregularity and its location into a map system; and a vehicle to anything, V2X, beacon; and a different vehicle.

According to a second aspect of the present disclosure, there is provided a vehicle comprising the controller of any preceding claim and further comprising the UWB node mounted in a vehicle and directed towards a traversal surface of the vehicle.

According to a third aspect of the present disclosure, there is provided a method of characterising an irregularity in a traversal surface comprising: receiving a channel impulse response from a UWB node operating in a radar mode, wherein the UWB node is mounted in a vehicle and directed towards a traversal surface of the vehicle such that the channel impulse response is indicative of reflections of a radar signal from the traversal surface; characterising an irregularity in the traversal surface based on the received channel impulse response and one or more signature channel impulse responses, CIRs, wherein each of the signature CIPs are indicative of an irregularity which may be identified in the CIR of the UWB node.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example embodiment of a vehicle comprising a controller and two UWB nodes;
Figure 2 shows an example method according to the present disclosure;
Figure 3 shows an average channel impulse magnitude for stone and wood surfaces with CIR bins along the x-axis and CIR magnitude in dB along the y-axis;
Figure 4 shows the evolution over time of the CIR amplitude for some channel impulse response, CIR, bins, received from a UWB node mounted to a vehicle and directed towards a traversal surface with time plotted along the x-axis and CIR magnitude measured in dB is plotted along the y-axis;
Figure 5 shows an example evolution over time of the CIR phase for some CIR bins, received from a UWB node mounted to a vehicle and directed towards a traversal surface with time plotted along the x-axis and CIR phase measured in degrees is plotted along the y-axis; and
Figure 6 shows an example computer readable medium.

### Detailed Description

There are many factors which impact road safety. One of these factors is the quality and integrity of road surfaces. There exist methods that can detect issues with a road, such as potholes, which typically involve vision or vibration-based techniques. The present disclosure provides a controller which utilises ultra-wideband (UWB) nodes operating in a radar mode to detect various properties and irregularities of a road.

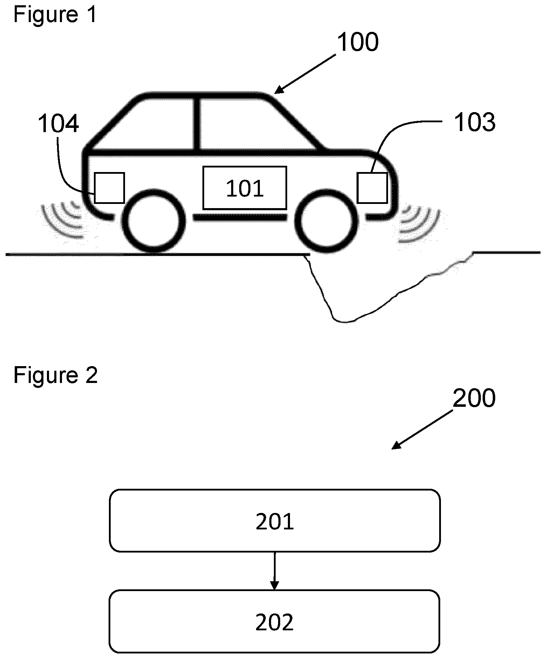

Figure 1 shows an example vehicle 100 that comprises a controller 101 configured to characterise an irregularity in a traversal surface of a vehicle 100. The controller 101 may be any suitable controller which may be implemented in hardware or in software. For example, the controller 101 may be part of an on-board advanced driver assistance system (ADAS) or an advanced marine assistance system (AMAS). The controller 101 is capable of receiving signalling from a UWB node 103, wherein the signalling is indicative of a channel impulse response (CIR) of the UWB node 103 and performing one or more processing steps in order to obtain a characterisation of the channel impulse response that may be associated with a particular type of irregularity.

The vehicle 100 in which the controller 101 may be located may be any vehicle 100 that traverses a traversal surface. Examples of such vehicles 100 may include cars, trucks, lorries, motorcycles, bicycles, trains and wagons, airplane with taxiing, or any other road-based vehicle. A radar system in such a vehicle would be able to detect changes in road surface type, pot-holes, roadkill, road markings or other features which alter the response of a radar system directed towards the road. Other examples of vehicles may include water-borne vehicles, such as boats, ships, yachts or other vehicles where the traversal surface is the waterbed, such as a riverbed or other waterbed. A radar system in such a water-borne vehicle may be configured to detect changes in, or irregularities in, the waterbed.

The channel impulse response is a mathematical function that describes how a radar signal propagates through space and reflects off objects in its path and may be obtained by way of a UWB node 103 operating in a radar mode. In the radar mode, the UWB node 103 may be configured to transmit one or more radar signals and receive reflections of those radar signals. The CIR essentially captures time-domain responses of a radar signal. The CIR may include information about the direct path of a radar signal and multiple path reflections, which are echoes that occur when the signal reflects off multiple surfaces before returning to the radar sensor. Since the CIR is able to interrogate the surfaces in the vicinity of the UWB node 103, it is able to provide information regarding the traversal surface, such as road. Details about the traversal surface may include information relating to potholes, lines painted on the road which impact the reflection properties of the radar signal, ice, water or other road contaminants. Any of the listed details about the traversal surface and, in particular, changes from one type of surface to another, may be categorised according to the present disclosure as an irregularity.

The controller 101 may be particularly configured to process signalling received from a UWB node 103 mounted in a vehicle and directed towards the traversal surface. That is, the controller 101 may be configured, by way of the signature CIRs used to characterise irregularities, to specifically process signalling indicative of a CIR having properties characteristic of those received from a vehicle 100 having a UWB node 103 arranged as described. It may be that the signalling received from the UWB node 103 comprises all of the data needed to determine a CIR response and that the CIR response is extrapolated or otherwise obtained by the controller 101. It will be appreciated, however, that receiving signalling indicative of the CIR response is immediately identical for the purposes of this disclosure to receiving the CIR response itself.

The UWB node 103 may be any suitable UWB node 103 which is configured to perform radar measurements. The UWB node 103 may be a multi-functional node. That is, the UWB node 103 may also be configured to provide for keyless entry functionality, keyless start functionality, driver identification or any other appropriate functionality for a vehicle. The UWB node 103 may be configured to provide one or more of these additional functionalities when not operating in the radar mode. In one or more embodiments, the UWB nodes 103 may be configured to provide for one or more of these additional functionalities while also operating in the radar mode.

The controller 101 is configured to characterise an irregularity in the traversal surface based on the received channel impulse response and one or more signature channel impulse responses. The signature channel impulse responses are channel impulse responses which are indicative of an irregularity which may be identified in the CIR of the UWB node 103. For example, there may be a signature channel impulse response indicative of what a channel impulse response is expected to look like when the vehicle encounters a pothole and another signature channel impulse response for a change in surface from a wet road to an icy road. Where a plurality of signature channel impulse responses are provided, they may form a library of signature channel impulse responses.

The characterisation of an irregularity may be performed by making a comparison of one or more features of the received CIR to features of the one or more signature CIRs. Features which may be compared may be a frequency, phase, or other characteristic of the CIRs. The irregularity may be classified as being a particular type of irregularity based on a threshold match being identified between the received CIR and one or more of the signature CIRs.

In one or more embodiments, the irregularity in the received CIR from the UWB node 103 may be characterised by using a machine learning algorithm which has been trained using the one or more signature channel impulse responses. In particular, the machine learning algorithm may be a classification algorithm, however, it will be appreciated that other machine learning algorithms may also be used in order to provide a characterisation of the received CIR.

In one or more embodiments, characterising the irregularity in the CIR received from the UWB node 193 may be further based on one or more historic channel impulse responses. The historic CIRs may be indicative of a CIR that has previously been received from the UWB node 103 of the vehicle 100. Thus, the historic CIRs may have specifically been captured by the UWB node 103 of the vehicle 100 which has captured the received CIR that is being characterised. This may provide additional data on which to base the characterisation. For example, a previous CIR may have been characterised as a pothole based on a comparison to one or more signature CIRs, however, that previously characterised CIR may then be useful in improving or speeding up the characterisation of potholes in the future.

The controller 101 may be further configured to receive a second CIR from a second UWB node 104 operating in a radar mode, wherein the second UWB node 104 is also mounted to the vehicle and directed towards the traversal surface of the vehicle 100 such that the second CIR is indicative of reflections of a second radar signal from the traversal surface. It will be appreciated that, in such embodiments, the UWB node 103 referred to so far may be a first UWB node 103. The second UWB node 104 may be located at a different location on the vehicle 100 compared to the first UWB node 103. For example, the first UWB node 103 may be located towards the front of the vehicle 100 while the second UWB node 104 maybe located towards the rear of the vehicle 100. The characterisation of the irregularity by the controller 101 may be further based on the received second CIR. There may also be provided a plurality of second signature CIPs which are indicative of the characteristics of irregularities when measured from the position of the second CIR. In other embodiments, the previously described one or more signature CIRs may be used. Characterising the irregularity based on the second CIR may improve the likelihood that the correct characterisation is made. It will be appreciated that three, four, six, ten or any other number of CIRs may be acquired from any number of UWB nodes and used to characterise an irregularity identified by the controller 101.

In one or more embodiments, there may be provided a second UWB node (or yet further UWB nodes), as described above. In such an embodiment, one of the two UWB nodes may be configured to emit a radar signal while the other of the two UWB nodes may be configured to detect reflections from the emitted radar signal. This may be referred to as a multistatic approach such that the radar mode comprises the two UWB nodes of the system operating in a multistatic radar mode. Thus, the radar mode of the present disclosure may either be a monostatic radar mode in which a single UWB node or each UWB node performs both radar signal emission and radar signal detection, or the radar mode may be a multistatic mode in which one or more UWB nodes provide for emission or a radar signal and one or more UWB nodes provide for detection of reflected radar signals. It will be appreciated that, in such an embodiment, the first and second UWB nodes may be configured to operate in a synchronised manner interference between the two nodes is mitigated or avoided.

In one or more embodiments, the controller 101 may be configured to only characterise an irregularity in the traversal surface if an irregularity is identified. That is, it may not be necessary to continuously characterise the received CIR but, instead, the controller 101 can wait until the controller 101 has identified that something has changed in the CIR that is indicative that an irregularity has occurred. The change that it is indicative that an irregularity has occurred may be one or more of: a change in an amplitude of the CIR greater than a predetermined threshold amplitude change; and a change in a phase of the CIR greater than a predetermined threshold phase change. It will be appreciated that the predetermined threshold amplitude and predetermined threshold phase changes are provided so that small changes in these parameters do not cause the controller 101 to attempt to determine an irregularity which may actually be a small vibration or stone on the road that is not of interest.

The controller 101 may also be configured to provide for control of the or each UWB node 103, 104. For example, the controller 101 may be configured to provide signalling to the or each UWB node 103, 104 to cause the or each UWB node 103, 104 to enter the radar mode. For example, the controller 101 may be configured to cause the or each UWB node 103, 104 to enter the radar mode when the vehicle begins to move or when it is set into a driving mode.

The or each UWB node 103, 104 may be configured to adjust its position or direction so that it can be used for a plurality of different functionalities. For example, the or each UWB node 103, 104 may be configured to point outwards from the vehicle 100 but not substantially towards the traversal surface when the vehicle 100 is operating in a tire pressure measurement monitoring mode so that the or each UWB node 103, 104 can be used as a sensor for detecting tire pressures. When the vehicle 100 is driving a long a normal road, however, the or each UWB node 103, 104 may be able to adjust its position so that it is directed towards the traversal surface in order to provide for irregularity detection and characterisation. The controller 101 may be configured to provide signalling to the or each UWB node 103, 104 to cause the or each UWB node 103, 104 to adjust its direction towards the traversal surface.

In one or more embodiments, there may be provided a plurality of UWB nodes wherein one or more of the plurality of UWB nodes are configured to provide for keyless entry functionality, while one or more other UWB nodes are directed towards the traversal surface for identification of irregularities in the traversal surface. The controller may be configured to select which UWB node to use based on the functionality which is needed. For example, the irregularity detecting UWB-nodes may be selected while the vehicle is in a driving mode and the keyless entry UWB nodes may be selected while the vehicle is in a parked mode. In other embodiments, the or each UWB node which provides for irregularity detection and one or more other functionalities may be the same UWB nodes. In one or more embodiments, the UWB node may comprise a UWB IC and an antenna. In other embodiments, the UWB node may comprise a UWB node and a plurality of antennas. In one or more embodiments, different functionalities may be implemented by way of a UWB selecting one of a plurality of antennas to which it is coupled. The antennas may be pointed in different directions depending on their intended functionality.

The controller 101 may be configured to provide control signalling to the or each UWB node 103, 104 to control a frequency of the radar signal based on a speed of the vehicle 100. Adjusting the frequency of the radar signal output by the or each UWB node 103, 104 when operating in the radar mode may allow for the spatial resolution of the radar to be tailored to account for the speed of the vehicle 100.

The controller 101 may also be configured to adjust one or more properties or modes of operation of the vehicle 100 based on the characterised irregularity. For example, the controller 101 may be configured to provide signalling to a suspension system of the vehicle 100 wherein the signalling is configured to change the suspension of the vehicle 100. Adjusting the suspension based on a CIR may allow the vehicle 100 to better handle different types of traversal surfaces, such as wet or icy surfaces, rapidly.

In other examples, the controller 101 may be configured to provide warning signalling to a user interface system configured to cause a warning to be presented to a driver of the vehicle 100. This may let them know about sudden or unexpected changes in road surface conditions.

If an irregularity is identified in the traversal surface by a UWB node 103 mounted to the front of a vehicle 100, the controller 101 may provide signalling configured to cause a UWB node 104 mounted to a rear of the vehicle 100 which is configured to cause the rear-mounted UWB node 104 to cause an adjustment in one or more radar parameters of the rear-mounted UWB node 104. This may allow for a more accurate or otherwise useful CIR to be obtained by the rear-mounted UWB node 104, for example, based in a characterisation made by the fore-mounted UWB node 103.

It will be appreciated that one or more of the above actions may be taken by the controller 101 in response to the characterisation of an irregularity.

The controller 101 may also be configured to provide signalling to one or more external devices, servers or other entities based on the characterisation of the irregularity. The additional actions may also be performed based on a location at which the irregularity was detected, which may be obtained by any suitable location-determination system within the vehicle 100. For example, the 101 may be configured to provide signalling to a fleet-analysis server configured to aggregate fleet data related to traversal surface irregularities. In other examples, the controller 101 may be configured to provide signalling indicative of the characterised irregularity and its location to a map update server configured to integrate the information about the irregularity and its location into a map system. This may, for example, allow a central map database to be updated so that other drivers can be warned about potential hazards or other irregularities. Such updates may also allow a central commune or regional authority to collect information about locations where potholes are developing without the need for manual reporting. Finally, the controller 101 may be configured to provide signalling indicative of the characterised irregularity and its location to a vehicle 100 to anything, V2X, beacon or another vehicle 100.

Figure 2 shows an example method 200 of characterising an irregularity in a traversal surface according to the present disclosure, which may be a computer implemented method performed by the controller. The method 200 comprises receiving 201 a channel impulse response from a UWB node operating in a radar mode, wherein the UWB node is mounted to a vehicle and directed towards a traversal surface of the vehicle such that the channel impulse response is indicative of reflections of a radar signal from the traversal surface; and characterising 202 an irregularity in the traversal surface based on the received channel impulse response and one or more signature channel impulse responses, CIRs, wherein each of the signature CIPs are indicative of an irregularity which may be identified in the CIR of the UWB node.

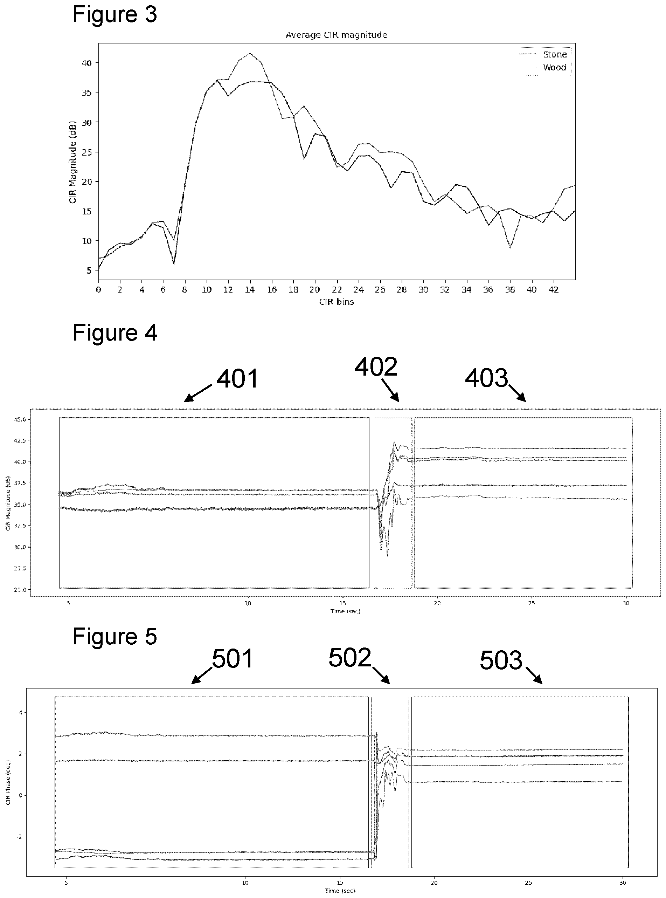

Figure 3 shows an example of an average channel impulse magnitude for stone and wood surfaces with CIR bins along the x-axis and CIR magnitude in dB along the y-axis. Each bin corresponds to a different range from the UWB node. Different materials yield different CIR magnitude profiles..

Figure 4 shows an example evolution over time of the channel impulse response, CIP, magnitude for some CIR, bins received from a UWB node mounted to a vehicle and directed towards a traversal surface. Time is plotted along the x-axis and CIR magnitude measured in dB is plotted along the y-axis. In the first box 401, regular traversal along a stone traversal surface is shown where no significant changes in the CIR magnitude. In the third box 403, regular traversal along a wooden traversal surface is shown where no significant changes in the CIR magnitude occur. In the second box 402 between the first and third boxes 401, 402, the impact on the CIR magnitude over time is shown as the vehicle transitions from the stone surface to the wooden surface. The different plotted lines in the figure are indicative of different CIR bins, where each bin corresponds to a different range increment from the UWB node.

Figure 5 shows a very similar example evolution over time of the channel impulse response, CIR, phase for some CIR, bins received from a UWB node mounted to a vehicle and directed towards a traversal surface. In this case, time is plotted along the x-axis and CIR phase, measured in degrees, is plotted along the y-axis. Again, in the first box 501, regular traversal along a stone traversal surface is shown where no significant changes in the CIR phase. In the third box 503, regular traversal along a wooden traversal surface is shown where no significant changes in the CIR phase occur. In the second box 502 between the first and third boxes 501, 503, the impact on the CIR phase over time is shown as the vehicle transitions from the stone surface to the wooden surface. The different plotted lines in the figure are indicative of different CIR bins, where each bin corresponds to a different range increment from the UWB node.

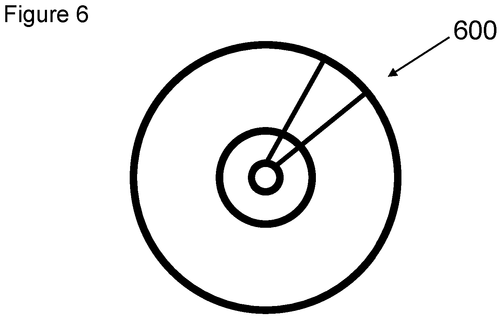

Figure 6 shows an example computer readable medium 600 comprising a computer program code configured to cause a controller or other processor, when the computer program code is run on the controller or processor, to cause the controller to perform the method described with reference to figure 2 and provide the functionality described with reference to figure 1.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A controller configured to:
receive a channel impulse response from a UWB node operating in a radar mode, wherein the UWB node is mounted in a vehicle and directed towards a traversal surface of the vehicle such that the channel impulse response is indicative of reflections of a radar signal from the traversal surface;
characterise an irregularity in the traversal surface based on the received channel impulse response and one or more signature channel impulse responses, CIRs, wherein each of the signature CIPs are indicative of an irregularity which may be identified in the CIR of the UWB node.

2. The controller of claim 1 further configured to, prior to characterising an irregularity, identify a change in the received CIR indicative that an irregularity has occurred and wherein the controller is configured to characterise an irregularity in the traversal surface if a change in the received CIR indicative that an irregularity has occurred is identified.

3. The controller of claim 2 wherein the identified change in the CIR indicative that an irregularity has occurred is one or more of: a change in an amplitude of the CIR greater than a predetermined threshold amplitude change; and a change in a phase of the CIR greater than a predetermined threshold phase change.

4. The controller of any preceding claim wherein characterising the irregularity in the CIR received from the UWB node is further based on one or more historic channel impulse responses indicative of a channel impulse response previously received from the UWB node of the vehicle.

5. The controller of any preceding claim wherein the controller is further configured to provide signalling to the UWB node configured to cause the UWB node to enter the radar mode.

6. The controller of claim 5 wherein the signalling that is configured to cause the UWB node to enter the radar mode is further configured to cause the UWB node to adjust its direction towards the traversal surface.

7. The controller of any preceding claim wherein the controller is configured to provide control signalling to the UWB node to control a frequency of the radar signal based on a speed of the vehicle.

8. The controller of any preceding claim wherein characterising the irregularity in the received CIR from the UWB node comprises making a comparison of one or more features of the received CIR to features of the one or more signature channel impulse responses.

9. The controller of any preceding claim wherein characterising the irregularity in the received CIR from the UWB node comprises using a machine learning algorithm which is trained using the one or more signature channel impulse responses.

10. The controller of claim 9 wherein the machine learning algorithm is a classification algorithm.

11. The controller of any preceding claim further configured to:
receive a second CIR from a second UWB node operating in a radar mode, wherein the second UWB node is mounted in the vehicle and directed towards the traversal surface of the vehicle such that the second channel impulse response is indicative of reflections of a second radar signal from the traversal surface; and
characterise the irregularity further based on the received second CIR.

12. The controller of any preceding claim wherein, based on the characterised irregularity, the controller is further configured to one or more of:
provide control signalling to a suspension system configured to change the suspension of the vehicle;
provide warning signalling to a user interface system configured to cause a warning to be presented to a driver of the vehicle;
provide radar control signalling to a UWB node mounted to a rear of the vehicle and configured to operate in a radar mode, wherein the radar control signalling is configured to cause an adjustment in one or more radar parameters of the UWB node.

13. The controller of any preceding claim wherein, based on the characterised irregularity, the controller is further configured to one or more of provide signalling indicative of the characterised irregularity and its location to one or more of:
a fleet-analysis server configured to aggregate fleet data related to traversal surface irregularities;
a map update server configured to integrate the information about the irregularity and its location into a map system; and
a vehicle to anything, V2X, beacon; and
a different vehicle.

14. A vehicle comprising the controller of any preceding claim and further comprising the UWB node mounted in a vehicle and directed towards a traversal surface of the vehicle.

15. A method of characterising an irregularity in a traversal surface comprising:
receiving a channel impulse response from a UWB node operating in a radar mode, wherein the UWB node is mounted in a vehicle and directed towards a traversal surface of the vehicle such that the channel impulse response is indicative of reflections of a radar signal from the traversal surface;
characterising an irregularity in the traversal surface based on the received channel impulse response and one or more signature channel impulse responses, CIRs, wherein each of the signature CIPs are indicative of an irregularity which may be identified in the CIR of the UWB node.
